# EUROPEAN PATENT APPLICATION

(11) **EP 1 797 756 A1**
(43) Date of publication of application: **20.06.2007**
(21) Application number: 06381056.8
(22) Date of filing: 15.12.2006
(51) Int. Cl.: A01M 1/24, A01M 29/00

(54) **Animal-repellent moulding**

(30) Priority: 19.12.2005 ES 200502743 U
(71) Applicant: Can Stop, S.l.u., 46930 Quart De Poblet (ES)
(72) Inventor: Gomez Garcia, Miguel, 46014, Valencia (ES)
(74) Representative: Sanz-Bermell Martinez, Alejandro

(57) **Abstract**

This consists of a hollow body in sections in the shape of a moulding (3) able to be secured to a surface such as a wall fence, facade or vehicle; an internal space in said structure able to house an absorbent material with a repellent substance; and an absorbent material set inside the moulding. It can consist of a supply tank, a dispensing tube (5) and supply and securing holes.

## Description

The technical field involved in this invention is that of means to prevent the presence of animals, either pets led by their owners, the types of domestic animals allowed to run free or even wild animals.

It is a well-known but nevertheless in many cases unavoidable fact that such animals tend to mark out their territory by means of urine and faeces. What is thus inevitable through the nature of said animals is a cause of inconvenience for the inhabitants of town and estates which are frequented by a large number of animals which urinate and defecate one on top of each others' waste, with the consequent problem of repeated odours unavoidable for any nearby residents.

Different type of repellent mouldings or repellent liquids have been tested and these are successful if used and replaced very often, involving the problem that they cease to have any effect shortly after being installed. This reason has enabled the inventor of the present device to invent the device described, which through a single installation provides a form of obtaining the same function as the one described in permanent and continuous use, so that the moulding is permanently active.

There is also another type of device, repellents based on ultrasounds which constitute an alternative technology, like the ones stated in ES 1059648 U through sonic barriers for different types of animals, which can produce aggressive and dangerous conducts due to bothering the animals.
ES 1037932 U refers to this technique.

### Statement of the prior state of the art

ES 1033557 U for a repellent adhesive strip, consists of an adhesive which has previously been submerged in a repellent liquid. The disadvantage of this device is that it does not constitute a means of permanent use, and requires special attention to remain active, continuously replacing the adhesive strip.

ES 1018261 U for a protector of fruit trees, consists of a perimeter receptacle for a poison.

The present invention is an animal-repellent moulding, which includes a medium for absorbing the repellent liquid, a support for said absorbent medium and a medium for communicating a repellent placed in a tank, towards a tube for diffusion of the repellent along the moulding, so that the repellent liquid is supplied uniformly along the moulding.

In order to make the following explanation clearer, two sheets of drawings are included, representing the essence of this invention in four figures.

Figure 1 shows a perspective view of a typical installation and a detail of the moulding.

Figure 2 shows a front view of a grille-type blind fitted with a moulding as covered by this invention.

Figure 3 shows a perspective view of one form of embodiment of the moulding, fitted with an internal muslin and holes for diffusion of the repellent.

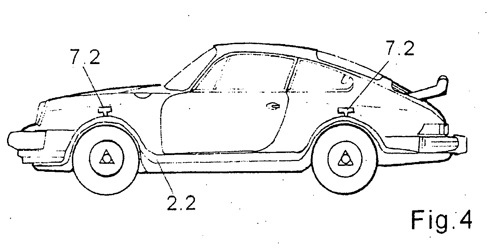

Figure 4 shows a diagrammatic elevation view of an automobile provided with these mouldings and a repellent tank.

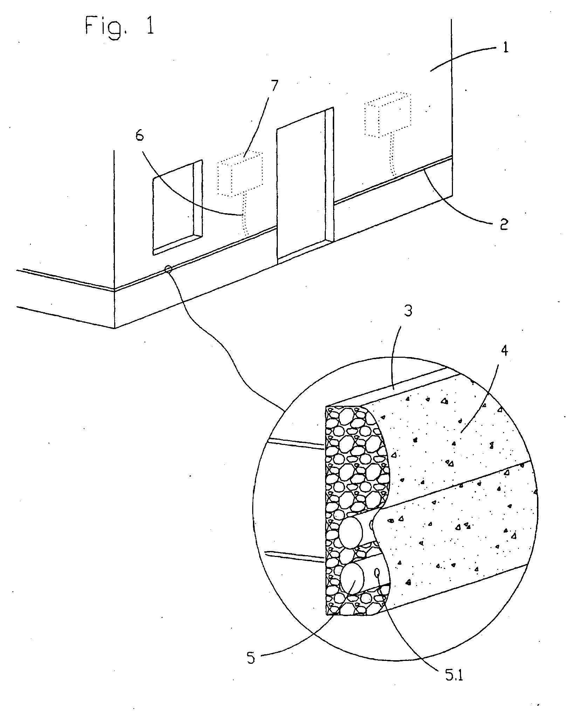

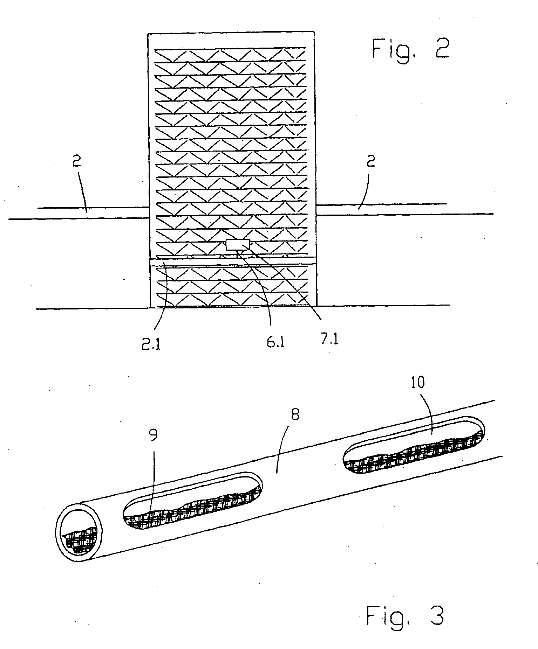

In said figures 1 represents the facade of the place where the mould according to the invention is fitted, 2 the moulding, 2.1 the moulding adapted to the blind of an establishment, 2.2 the moulding adapted to a vehicle, 3 the outer envelope or casing of the moulding, basically consisting of a preferably rigid body, whose front part 4 can be made of a porous material or be provided with holes, and which can absorb an animal-repellent liquid, 5 being a tube with holes 5.1 or porous textile material for dispensing the repellent product which has said holes along said tube for uniform distribution of the repellent. 6 is a tube for communicating the tank shown as with 7 and the moulding. In the embodiment for blinds, 7.1 indicates a tank for blinds, 6.1 a tube for communication between the tank shown as 7.1 and the moulding 2.1. In the embodiment for vehicles, 7.2 is the tank for vehicles and 2.2 the moulding for vehicles. Figure 3 shows an embodiment of moulding 8 formed of an open tube which has a piece of muslin 9 inside and openings 10 in the moulding 8 for greater dissipation of the repellent in said moulding.

### Explanation of one form of embodiment.

The moulding described herein has the function explained of repelling any animals approaching the place where this is used. To do this it has a rigid support which can be fitted by screws or other means to a wall, partition wall, façade or fence, so that it can permanently emit an odour that repels animals down its whole length. It does this by having at least one internal tube which has holes or pores so that it spreads the repellent odour evenly along its whole length. One embodiment with the same inventive essence intended for use on doors has been designed. Since there are two types of doors, both can have the repellent in the same conditions.

Roller doors have the disadvantage of needing to be lifted to open, which means that the moulding has to be close to their lower end, and the tank contained in their body insofar as this is possible. These blinds do not however tend to be inserted all the way into the roll, which means that the lower end can be fitted with this mould and its tank with no further requisite.

Instead of a tank a filling nozzle communicating with tube 5 can be used.

In another form of embodiment, an open tube can also be fitted on a part or along its whole length, with an internal piece of muslin from which the repellent odour is emitted. Both of these can be combined, the spongy moulding with internal tube, and the open tube with the muslin, depending on the concern for the permanence of the odours, the effectiveness of the repellent and consequently the increase in the dosage of the repellent to obtain such effectiveness.

The moulding can incorporate inside a longitudinal textile body, such as a cord or similar, able to absorb the repellent material and allow this to diffuse slowly, so that the effectiveness of the product and its durability increase significantly.

The system allows this to be fitted to vehicles. The moulding can be placed at the bottom of the doors and around the perimeter of the wheel arches, the so-called mudguards, so that this can be fed from a common tank communicated by tubes established for this purpose.

Non-rolling doors can be fitted in the same way with the tank preferably on the inside. These internal tanks entail the advantage that they cannot be tampered with from the outside, and at the same time the repellent is usefully fitted with a visible level, meaning that this can be systematically topped up without slipping the memory. The tanks are placed in a higher position than the moulding.

The mouldings can be made in sections, these sections being able to be assembled together by a tongue and groove (or mortise and tenon) system, so that one of the ends will be male and the other female, or by accessory coupling items. Connection pieces have also been envisaged for external or internal angles to facilitate assembling the moulding system.

It has also been designed for the mouldings 3 to have both in the part for securing to the wall and at the opposite end holes facing these points, enabling the moulding to be secured to the wall by means of screws whose head will be on the inside, as well as different dispensing holes along their length.

For industrial application in making animal-repellent mouldings.

## Claims

1. An animal-repellent moulding, **characterised by** being formed of at least:
- a support structure consisting of sections with the shape of a moulding (3), able to be secured to a surface such as a wall, fence, facade or vehicle;
- An internal hole in this structure able to house a material that absorbs a repellent substance;
- An absorbent material set inside the moulding (3).

2. An animal-repellent moulding, according to claim 1, **characterised by** also consisting of at least one tube (5) for dispensing a repellent substance, set along said moulding.

3. An animal-repellent moulding, according to either of claims 1 and 2, **characterised by** also consisting of a nozzle or a tank for filling and dispensing the repellent substance set in a higher position than the moulding (3), with the tank (7) set in such a way as to house an amount of repellent liquid which can come out of pores or small orifices (5.1) made in the pipe (5) so as to evenly distribute the repellent product along the moulding.

4. An animal-repellent moulding, according to claim 3, **characterised by** also including a connection (6) between the tube (5) set along the moulding (3) and the tank (7).

5. An animal-repellent moulding, according to claim 1, **characterised in that**, according to a first mode of embodiment, the moulding (4) is able to be set over a roller-type blind door and has a tank (7.1) close to and over the moulding for feeding the repellent liquid.

6. An animal-repellent moulding, according to claim 1, **characterised in that**, according to a second mode of embodiment, the moulding is able to be set on a swinging door and has a tank beside the moulding or behind the door for feeding repellent.

7. An animal-repellent moulding, according to claim 1, **characterised in that**, according to a third form of embodiment, the moulding is able to be set on the lower part and wheel arches (2.2) of motor vehicles, being fed by at least one tank (7-2).

8. An animal-repellent moulding, according to claim 1, **characterised in that** it consists of a tube (8) open at one end (10) or fully open, with an internal piece of muslin (9) able to soak up and diffuse the repellent from the tank (7).

9. An animal-repellent moulding, according to claim 1, **characterised in that** the body that forms the moulding has securing holes at the base for support to the wall, and other holes facing these for allowing the wall plugs, screws and securing tool through, as well as other holes for diffusing the repellent substances set regularly or irregularly along said moulding.

10. An animal-repellent moulding, according to claim 1, **characterised by** also consisting of accessories for connecting the moulding sections for external and internal angles.
